(19) Europäisches Patentamt / European Patent Office / Office européen des brevets

(11) **EP 3 845 397 B1**

## (12) EUROPEAN PATENT SPECIFICATION

(45) Date of publication and mention
of the grant of the patent:
**30.07.2025  Bulletin 2025/31**

(21) Application number: **19856062.5**

(22) Date of filing: **06.08.2019**

(51) International Patent Classification (IPC):
**B60C 11/12** *(2006.01)*    **B60C 11/00** *(2006.01)*
**B60C 11/03** *(2006.01)*    **B60C 11/13** *(2006.01)*
**B60C 11/11** *(2006.01)*

(52) Cooperative Patent Classification (CPC):
**B60C 11/0306; B60C 11/005; B60C 11/0302;**
**B60C 11/11; B60C 11/1259; B60C 11/1263;**
**B60C 11/13;** B60C 11/032; B60C 2011/0016;
B60C 2011/0346; B60C 2011/0348;
B60C 2011/0351; B60C 2011/1213;
B60C 2011/1254

(86) International application number:
**PCT/JP2019/030973**

(87) International publication number:
**WO 2020/044987 (05.03.2020 Gazette 2020/10)**

### (54) PNEUMATIC TIRE

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.08.2018   JP 2018162968**

(43) Date of publication of application:
**07.07.2021   Bulletin 2021/27**

(73) Proprietor: **The Yokohama Rubber Co., Ltd.
Hiratsuka-shi, Kanagawa 254-8601 (JP)**

(72) Inventor: **NUKUSHINA, Ryosuke
Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(56) References cited:
WO-A1-2018/117024   JP-A- 2005 007 988
JP-A- 2005 186 827   JP-A- 2009 262 646
JP-A- 2013 018 456   JP-A- 2014 144 777
JP-A- H09 142 109

## Description

Technical Field

The present invention relates to a pneumatic tire.

Background Art

In the related art, for example, the pneumatic tire described in Patent Document 1 is designed to improve load durability performance while ensuring performance on snow and performance on ice. The pneumatic tire includes, in a tread surface in a land portion, a surface processing portion including a plurality of inclined narrow grooves inclined with respect to the tire circumferential direction; a plurality of sipes extending along the tire width direction and intersecting the plurality of inclined narrow grooves of the surface processing portion and arranged side by side in the tire circumferential direction, each of the plurality of sipes being separated midway while extending along the tire width direction; and a recess portion spaced away from an end portion of each of the separated plurality of sipes at a gap where each of the plurality of sipes is separated, the recess portion being provided to extend along the tire circumferential direction and intersect the plurality of inclined narrow grooves of the surface processing portion. A depth D1 from the tread surface of each of the plurality of sipes, a depth D2 from the tread surface of the recess portion, and a depth D3 from the tread surface of each of the plurality of inclined narrow grooves of the surface processing portion satisfy D3 < D2 < D1.

Also, for example, the pneumatic tire described in Patent Document 2 is designed to be suitable to drive over icy and snowy roads. The pneumatic tire is provided with a plurality of blocks in a tread surface, at least one of the plurality of blocks is divided into at least two substantially parallelogram block small pieces by at least one open sipe including both ends opened at block vertical side surfaces along the tire circumferential direction and extending substantially parallel to an inclined lateral groove, the inclined lateral groove spacing each of the plurality of blocks apart in a tire circumferential direction, and each of the block small pieces at an end located at both ends in the tire circumferential direction is provided with at least one closed sipe extending in the tire width direction at an angle less than 45° with respect to the tire width direction and including both ends each terminating within each of the block small pieces.

Also, for example, the winter pneumatic tire described in Patent Document 3 is designed to achieve braking performance on ice and uneven wear resistance in a compatible manner at a high level. The winter pneumatic radial tire is formed with, in a tread surface, a plurality of block rows in which a large number of blocks are arranged in a tire circumferential direction. Further, each of the blocks is provided with a plurality of sipes extending in a tire width direction, and at least the sipes formed in each of the blocks of the plurality of block rows on both shoulder sides are constituted of two types of long and short sipes having different lengths in the tire width direction, the lengths of the sipes in the tire width direction being set such that the long sipe is from 45% to 70% and the short sipe is from 10% to 30% with respect to the width of each of the blocks in the tire width direction.

Citation List

Patent Literature

Patent Document 1: JP 2018-039337 A
Patent Document 2: JP 4299745 B
Patent Document 3: JP 4386679 B

Tire treads with grooves and sipes are disclosed in WO 2018/117024 A1, JP 2014 144777 A, JP 2013 018456 A, JP 2005 186827 A, JP 2009 262646 A and JP H09 142109 A.

Summary of Invention

Technical Problem

A winter studless pneumatic tire ensuring performance on ice (braking performance on icy road surfaces) uses, in a tread cap rubber forming a tread surface, a compound having a lower hardness than that of a summer pneumatic tire, and the adhesion friction force increases. Furthermore, a large number of sipes are disposed in the tread surface in order to improve the edge components.

When a compound having a lower hardness is used in the tread cap rubber, however, the amount of deformation of blocks is large at the time of contacting the road surface, and the rubber itself likely accumulates heat. Furthermore, due to the fact that the large number of sipes are disposed, stress is concentrated on sipe bottoms, and when driving is continued under a low pressure and a high load state, a shoulder block having a relatively high ground contact pressure in the tread surface may break (referred to as tread chunk).

Thus, it is conceivable to increase the hardness of the tread cap rubber to suppress deformation of blocks, but the adhesion friction force will decrease to deteriorate the performance on ice.

In light of the foregoing, an object of the invention is to provide a pneumatic tire with improved durability performance while ensuring the performance on ice.

Solution to Problem

In order to solve the problems described above and achieve the object, a pneumatic tire according to an aspect of the present invention includes: a plurality of shoulder blocks provided side by side in a tire circumferential direction on an outermost side in a tire width direction, by a main groove extending in the tire circumferential direction in a tread surface of a tread portion and by a plurality of subsidiary grooves intersecting the main groove; and a plurality of sipes extending along the tire width direction in the tread surface of each of the plurality of shoulder blocks and provided side by side in the tire circumferential direction, each of the plurality of sipes including at least an end portion terminated on an outer side in the tire width direction, a cap tread rubber forming the tread surface has JIS hardness Ha of in a range of not less than 45 and not greater than 55, a snow traction index in a 0°direction being not less than 180, and a shortest distance between an outer side edge in the tire width direction of each of the plurality of shoulder blocks and an end portion on the outermost side in the tire width direction of one of the plurality of sipes being formed in a range of not less than 1.5 mm and not greater than 2.5 mm.

Furthermore, in the pneumatic tire according to an aspect of the present invention, the shortest distance between the outer side edge in the tire width direction of each of the plurality of shoulder blocks and the end portion on the outermost side in the tire width direction of one of the plurality of sipes is formed preferably in a range of not less than 1.6 mm and not greater than 2.0 mm.

Furthermore, in the pneumatic tire according to an aspect of the present invention, the shortest distance between the outer side edge in the tire width direction of each of the plurality of shoulder blocks and the end portion on the outermost side in the tire width direction of one of the plurality of sipes is formed preferably in a range of not less than 1.7 mm and not greater than 1.8 mm.

Furthermore, in the pneumatic tire according to an aspect of the present invention, each of the plurality of shoulder blocks is provided with an undertread rubber layered on an inner side in a tire radial direction on the cap tread rubber, JIS hardness Ha of the cap tread rubber and JIS hardness Hb of the undertread rubber satisfies a relationship of $5 \le$ Hb-Ha $\le 20$, and in all of the plurality of sipes formed in one shoulder block, a sipe bottom equivalent to 80% of a sum of projected lengths is preferably provided in the undertread rubber.

Furthermore, in the pneumatic tire according to an aspect of the present invention, each of the plurality of shoulder blocks has a ratio of the undertread rubber to a groove depth of the main groove preferably in a range of not less than 50% and not greater than 60%.

Furthermore, in the pneumatic tire according to an aspect of the present invention, a rotation direction when mounted on a vehicle is designated, and a circumferential narrow groove extending in the tire circumferential direction and having a depth of not less than 0.2 mm and not greater than 3.0 mm is provided at a central portion of the tire width direction of each of the plurality of shoulder blocks, the circumferential narrow groove being preferably formed to be opened only on an outer side edge in the tire circumferential direction on a trailing side of each of the plurality of shoulder blocks when the pneumatic tire comes into contact with a ground.

Furthermore, in the pneumatic tire according to an aspect of the present invention, when a maximum dimension in the tire circumferential direction of each of the plurality of shoulder blocks is not greater than 30 mm, a number of the plurality of sipes disposed side by side in the tire circumferential direction is preferably not greater than 4, and when the maximum dimension in the tire circumferential direction of the plurality of shoulder blocks is greater than 30 mm, the number of each of the plurality of sipes disposed side by side in the tire circumferential direction is preferably not less than 5.

Advantageous Effects of Invention

When the shortest distance exceeds 2.5 mm, the ground contact pressure of each of the plurality of shoulder blocks becomes excessive, and the failure of tread chunk is likely to be generated. Conversely, when the shortest distance is less than 1.5 mm, the ground contact pressure is reduced, but the outer side edge in the tire width direction of each of the plurality of shoulder blocks and the end portion of each of the plurality of sipes are too close, and cracks are likely to be generated. Thus, in the pneumatic tire according to an embodiment of the present invention, the shortest distance is formed in a range of not less than 1.5 mm and not greater than 2.5 mm, and the generation of above-described problems can be suppressed. Furthermore, when JIS hardness Ha of the cap tread rubber forming the tread surface of each of the plurality of shoulder blocks is less than 45, the movement of each of the plurality of shoulder blocks when being in contact with the road surface during the rotation of the pneumatic tire is increased, the amount of the deformation is large, and the rubber itself accumulates the heat likely to generate the above-described problems. Conversely, when the Ha exceeds 55, the adhesion friction force declines and the performance on ice tends to decline. Accordingly, in the pneumatic tire according to an embodiment of the present invention, the Ha is set in a range of not less than 45 and not greater than 55, and the generation of the above-described problems can be suppressed. As a result, the pneumatic tire according to an embodiment of the present invention can improve durability performance while ensuring the performance on ice.

Brief Description of Drawings

FIG. 1 is a meridian cross-sectional view of a pneumatic tire according to an embodiment of the present invention.
FIG. 2 is a partial plan view of a tread portion of a pneumatic tire according to an embodiment of the present invention.
FIG. 3 is a partial enlarged plan view of a tread portion of a pneumatic tire according to an embodiment of the present invention.
FIG. 4 is a partial enlarged meridian cross-sectional view of a pneumatic tire according to an embodiment of the present invention.
FIG. 5 is a table showing the results of performance tests of pneumatic tires according to examples of the present invention.
FIG. 6 is a table showing the results of performance tests of pneumatic tires according to examples of the present invention.

Description of Embodiments

Embodiments of the present invention are described in detail below with reference to the drawings.

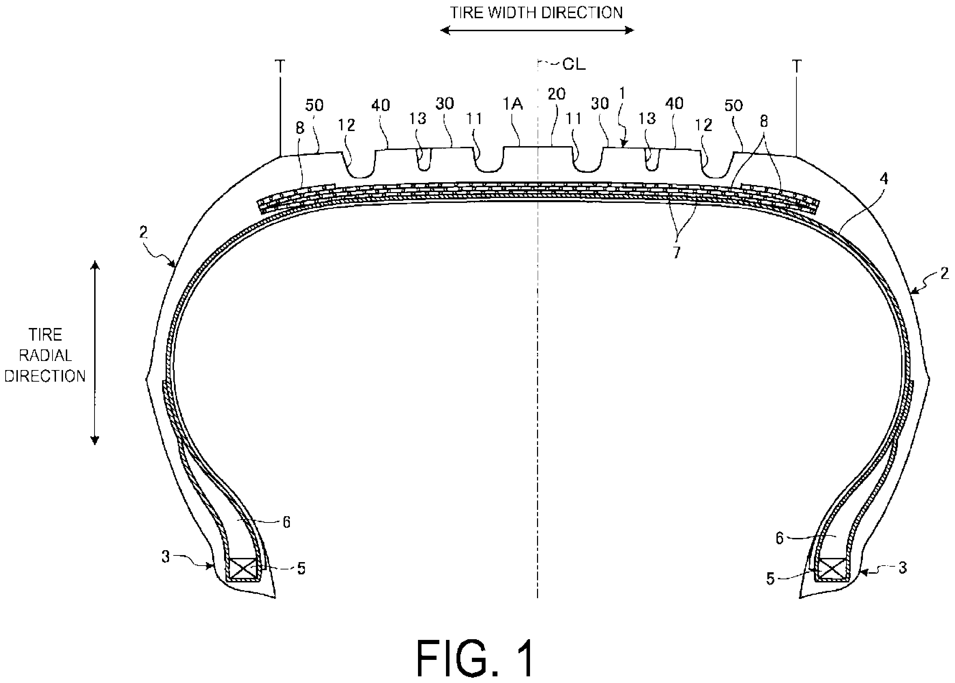

FIG. 1 is a meridian cross-sectional view of a pneumatic tire according to the present embodiment.

Herein, "tire circumferential direction" refers to the circumferential direction with the rotation axis of the pneumatic tire (not illustrated) as the center axis. Additionally, "tire width direction" refers to a direction parallel with the rotation axis. "Inner side in the tire width direction" refers to a direction toward a tire equatorial plane (tire equator line) CL in the tire width direction. "Outer side in the tire width direction" refers to a direction away from the tire equatorial plane CL in the tire width direction. "Tire radial direction" refers to the direction orthogonal to the rotation axis. "Tire equatorial plane CL" refers to the plane orthogonal to the rotation axis and passing through the center of the tire width of the pneumatic tire. "Tire equator line" refers to the line in the tire circumferential direction of the pneumatic tire that lies on the tire equatorial plane CL. In the present embodiment, the tire equator line and the tire equatorial plane are denoted by the same reference sign CL.

The pneumatic tire according to the present embodiment is applied as a studless tire for use on icy and snowy roads.

As illustrated in FIG. 1, the pneumatic tire according to the present embodiment includes: a tread portion 1 having an annular shape and extending in the tire circumferential direction, a pair of sidewall portions 2 respectively disposed on both sides of the tread portion 1, and a pair of bead portions 3 respectively disposed on the inner side in the tire radial direction of each of the pair of sidewall portions 2.

A carcass layer 4 is provided between the pair of bead portions 3. The carcass layer 4 includes a plurality of reinforcing cords extending in the tire radial direction, is folded back from the tire inner side to the tire outer side around a bead core 5 disposed in each of the pair of bead portions 3, and is wound around in the tire circumferential direction in a toroidal shape to constitute a backbone of the tire. A bead filler 6 having a triangular cross-sectional shape formed from rubber composition is disposed on the outer circumference of the bead core 5.

A plurality of belt layers 7 is disposed on the outer side in the tire radial direction that is the tread portion 1 side of the carcass layer 4. Each of the plurality of belt layers 7 includes a plurality of reinforcing cords inclined with respect to the tire circumferential direction, and each of the plurality of reinforcing cords is disposed to intersect each other between each of the plurality of belt layers 7. In each of the plurality of belt layers 7, the inclination angle of each of the plurality of reinforcing cords with respect to the tire circumferential direction is set in a range of, for example, not less than 10° and not greater than 40°. Steel cords are preferably used as the reinforcing cords of the belt layers 7. To improve high-speed durability, at least one belt cover layer 8 is disposed on the outer side in the tire radial direction of the belt layer 7. The belt cover layer 8 is formed by arranging a plurality of reinforcing cords at an angle of, for example, not greater than 5° with respect to the tire circumferential direction. Nylon, aramid, or similar organic fiber cords are preferably used as the reinforcing cords of the belt cover layer 8.

Note that the tire internal structure described above represents a typical example for a pneumatic tire, and the pneumatic tire is not limited thereto.

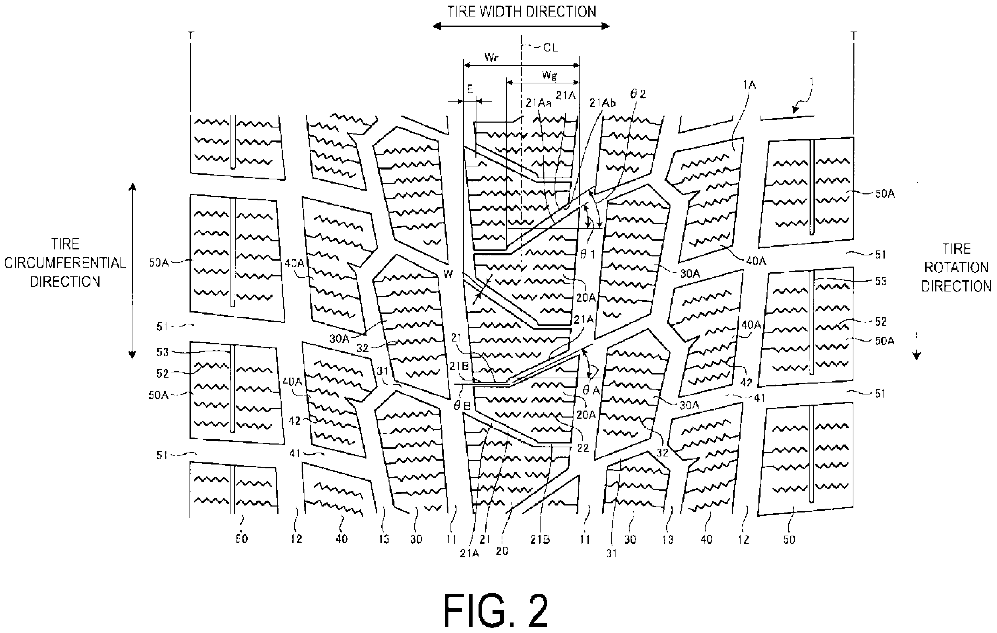

FIG. 2 is a partial plan view of a tread portion of a pneumatic tire according to the present embodiment.

As illustrated in FIG. 2, a tread surface 1A is the surface of the tread portion 1 and in contact with the road surface, and in the tread surface 1A, a pair of main grooves 11 extending in a zigzag manner along the tire circumferential direction on both sides in the tire width direction of the tire equatorial plane CL, a pair of main grooves 12 extending in a zigzag manner along the tire circumferential direction each on the outer side in the tire width direction of each of the pair of main grooves 11, and a pair of auxiliary grooves 13 extending in a zigzag manner along the tire circumferential direction each between each of the pair of main grooves 11 and each of the pair of main grooves 12 are formed. Each of the pair of main grooves 11 and 12 has a groove width in a range of not less than 7 mm and not greater than 14 mm and a groove depth in a range of not less than 8.0 mm and not greater than 12.0 mm. Each of the pair of auxiliary grooves 13 has a groove width that is narrower than that of each of the pair of main grooves 11 and 12 and has a groove width in a range of not less than 3 mm and not greater than 10 mm and a groove depth in a range of not less than 7.0 mm and not greater than 11.0 mm.

As a result, in the tread portion 1, a center land portion 20 is defined between each of the pair of main grooves 11, an intermediate land portion 30 is defined between each of the pair of main grooves 11 and each of the pair of auxiliary grooves 13, an intermediate land portion 40 is defined between each of the pair of auxiliary grooves 13 and each of the pair of main grooves 12, and a shoulder land portion 50 is defined on the outer side in the tire width direction of each of the pair of main grooves 12.

The center land portion 20 is formed with, in the tread surface 1A, a plurality of subsidiary grooves 21 disposed side by side in the tire circumferential direction, each of the plurality of subsidiary grooves 21 including both ends opened to both of the pair of main grooves 11. Each of the plurality of subsidiary grooves 21 is formed to be bent midway and includes: an inclined portion 21A inclined with respect to the tire width direction; and a parallel portion 21B parallel to the tire width direction. The plurality of subsidiary grooves 21 disposed side by side in the tire circumferential direction include: those in which the inclined portion 21A opened to one of the pair of main grooves 11 on one side in the tire width direction and the parallel portion 21B opened to the other of the pair of main grooves 11 on the other side in the tire width direction; and those in which the inclined portion 21A opened to the other of the pair of main grooves 11 on the other side in the tire width direction and the parallel portion 21B opened to the one of the pair of main grooves 11 on the one side in the tire width direction. These are disposed alternately along the tire circumferential direction. As a result, the center land portion 20 is divided into a plurality of portions in the tire circumferential direction by the plurality of subsidiary grooves 21, and a plurality of center blocks 20A disposed side by side in the tire circumferential direction are defined.

Each of the plurality of center blocks 20A is formed with, in the tread surface 1A, a plurality of sipes 22 extending in the tire width direction and disposed side by side in the tire circumferential direction. The plurality of sipes 22 disposed side by side in the tire circumferential direction are divided midway in the tire width direction. Most of the divided plurality of sipes 22 are formed such that one end is closed in each of the plurality of center blocks 20A and the other end is opened to either of the pair of main grooves 11 in the tire width direction. Some of each of the divided plurality of sipes 22 have both ends closed in each of the plurality of center blocks 20A. Each of the plurality of sipes 22 has a sipe width in a range of not less than 0.3 mm and not greater than 1.2 mm and a groove depth of not greater than that of each of the pair of main grooves 11. Each of the plurality of sipes 22 is formed such that an opening portion to the tread surface 1A is in a zigzag shape continuously bent a plurality of times. In this case, each of the plurality of sipes 22 is a two-dimensional sipe, in which a shape in the tread portion 1 from the tread surface 1A to the inner side in the tire radial direction is a zigzag shape along a zigzag shape of the tread surface 1A, or a three-dimensional sipe, which is further bent in the tire circumferential direction in addition to the zigzag shape. Furthermore, the opening portion of each of the plurality of sipes 22 to the tread surface 1A may be continuously formed in a linear shape. In this case, each of the plurality of sipes 22 may be a one-dimensional sipe, in which the shape in the tread portion 1 from the tread surface 1A to the inner side in the tire radial direction is the linear shape along the linear shape of the tread surface 1A, or may be a two-dimensional sipe, which is bent.

Here, in the pneumatic tire according to the present embodiment, the rotation direction (tire rotation direction) when the tire is mounted on a vehicle is designated. Although not illustrated in the drawings, the designation of the rotation direction is indicated by an indicator (for example, an arrow that points in the direction when the vehicle travels forward) provided on the sidewall portion 2 on the side surface of the tire, located on the outer side of the tread portion 1 in the tire width direction.

In each of the plurality of center blocks 20A, a leading side at the time of contact with the ground is the same side as the rotation direction (the side in the rotation direction when the tire is mounted on a vehicle), and a trailing side at the time of contact with ground is the opposite side in the rotation direction (the opposite side in the rotation direction when the tire is mounted on a vehicle). Each inclined portion 21A of each of the plurality of subsidiary grooves 21 is inclined with respect to the tire width direction such that an end portion that is, in the center land portion 20, a boundary with the parallel portion 21B faces the leading side (that is, the side in the rotation direction). In each inclined portion 21A, a groove wall 21Aa on the leading side protrudes to the outer side in the tire width direction than a groove wall 21Ab on the trailing side. In addition, in each inclined portion 21A, the difference between an angle $\theta1$ of the groove wall 21Aa on the leading side with respect to the tire width direction and an angle θ2 of the groove wall 21Ab on the trailing side with respect to the tire width direction is set in a range of 0° ≤ θ1-θ2 ≤ 5°. In other words, each inclined portion 21A has a structure in which the groove wall 21Aa on the leading side and the groove wall 21Ab on the trailing side are parallel to each other or in which the groove wall 21Aa on the leading side and the groove wall 21Ab on the trailing side become gradually closer to each other toward a main groove 11 side to which they are opened.

Thus, in the pneumatic tire according to the present embodiment, when a tread pattern having a designated rotation direction is employed, the center land portion 20 is provided in a center region that is on the tire equatorial plane CL of the tread portion 1, the plurality of subsidiary grooves 21 disposed side by side in the tire width direction are formed in the center land portion 20, the inclined portion 21A of each of the plurality of subsidiary grooves 21 is inclined with respect to the tire width direction such that the end portion in the center land portion 20 faces the leading side, the groove wall 21Aa on the leading side of each inclined portion 21A protrudes to the outer side in the tire width direction than the groove wall 21Ab on the trailing side, and in each inclined portion 21A, the difference between the angle θ1 of the groove wall 21Aa on the leading side with respect to the tire width direction and the angle θ2 of the groove wall 21Ab on the trailing side with respect to the tire width direction is set in a range of 0° ≤ θ1-θ2 ≤ 5°.

Specifically, when driving on snow-covered road surfaces, the road surface slides relative to the tread portion 1 in the opposite direction to the rotation direction, the inclined portion 21A of each of the plurality of subsidiary grooves 21 is closed by slipping generated between the tread portion 1 and the road surface, and the snow column in the inclined portion 21A is compressed. On the other hand, when braking on snow-covered road surfaces, the road surface slides relative to the tread portion 1 in the same direction as the rotation direction, the inclined portion 21A of each of the plurality of subsidiary grooves 21 is opened by slipping generated between the tread portion 1 and the road surface, and more snow is introduced into the inclined portion 21A. As a result, the shear force of the snow column formed in the inclined portion 21A of each of the plurality of subsidiary grooves 21 increases, the driving force and braking force when driving on snow are increased based on the snow column shear force, and performance on snow can be effectively improved.

Furthermore, the above-described difference between the angle θ1 of each inclined portion 21A of the groove wall 21Aa on the leading side with respect to the tire width direction and the angle θ2 of the groove wall 21Ab on the trailing side with respect to the tire width direction allows the inclined portion 21A to be easily closed when driving on the snow-covered road surfaces, and sufficient snow is introduced into the inclined portion 21A when braking, and performance on snow can be effectively improved. When the angle θ1 is smaller than the angle θ2 and the angle difference (θ1-θ2) between the groove walls 21Aa and 21Ab is a negative value, the effect of compressing the snow column in the inclined portion 21A when driving on the snow-covered road surfaces decreases, and conversely, when the angle difference (θ1-θ2) between the groove walls 21Aa and 21Ab is greater than 5°, the effect of introducing snow into the inclined portion 21A when braking decreases.

The inclined portion 21A of each of the plurality of subsidiary grooves 21 has a ratio of a groove width W to a groove depth D preferably in a range 0.10 ≤ W/D ≤ 0.30. As a result, the inclined portion 21A deforms suitably in a state of contacting to the ground. As a result, the inclined portion 21A is easily closed when driving on snow-covered road surfaces, sufficient snow is introduced into the inclined portion 21A when braking, and performance on snow can be effectively improved. When the ratio W/D is smaller than 0.10, the snow column shear force based on the inclined portion 21A is insufficient, and conversely, when the ratio W/D is greater than 0.30, the effect of compressing snow within the inclined portion 21A tends to decrease. Note that when the groove depth D and the groove width W of the inclined portion 21A change depending on the position in the extension direction of the inclined portion 21A, the maximum values of the groove depth D and the groove width W are referred to as the groove depth D and the groove width W, respectively.

Furthermore, the inclined portion 21A has a projection amount E in the tire width direction of the groove wall 21Aa on the leading side preferably in a range of not less than 5% and not greater than 15% and more preferably in a range of not less than 8% and not greater than 12% of a tire width direction dimension Wr of the center land portion 20. As a result, sufficient snow is introduced into the inclined portion 21A when braking on the snow-covered road surfaces, and the performance on snow can be effectively improved. When the projection amount E is too small, the effect of introducing snow into the inclined portion 21A decreases, and conversely, when the projection amount E is too large, a portion where the rigidity of the center land portion 20 is extremely different is formed, and abnormal wear may be generated. Note that the projection amount E of the groove wall 21Aa on the leading side of the inclined portion 21A and the tire width direction dimension Wr of the center land portion 20 are both projected dimensions in the tire circumferential direction.

The center line of the inclined portion 21A has an angle θA with respect to the tire width direction preferably in a range of not less than 25° and not greater than 65°. By inclining the inclined portion 21A with respect to the tire width direction in the range of the above-described angle θA, snow is easily introduced into the inclined portion 21A when slipping relative to the road surface is generated when braking on snow-covered road surfaces, and the performance on snow can be effectively improved. When the angle θA of the inclined portion 21A is less than 25°, the effect of introducing snow into the inclined portion 21A decreases, and conversely, when the angle θA is greater than 65°, a decrease in the rigidity of the center land portion 20 tends to become apparent.

The inclined portion 21A preferably has a structure in which the groove depth gradually deepens from the opening end side opened to either of the pair of main grooves 11 toward the inside of the center land portion 20 along the extension direction. As a result, the center land portion 20 side in the extension direction of the inclined portion 21A has a relatively larger volume than the opening end side, the effect of guiding snow toward the center land portion 20 side in the extension direction of the inclined portion 21A is increased, and the snow column shear force can be effectively increased. Note that in the inclined portion 21A, an end portion (bent portion connecting to the parallel portion 21B) on the center land portion 20 side in the extending direction has a groove depth preferably in a range of not less than 7 mm and not greater than 14 mm.

Furthermore, the inclined portion 21A has a tire width direction dimension Wg preferably in a range of 40% ≤ Wg/Wr ≤ 80% and more preferably in a range of 50% ≤ Wg/Wr ≤ 70% with respect to the tire width direction dimension Wr of the center land portion 20. By setting the tire width direction dimension Wg of the inclined portion 21A with respect to the tire width direction dimension Wr of the center land portion 20 in this manner, the snow column shear force based on the inclined portion 21A is sufficiently ensured, and performance on snow can be effectively improved. When the tire width direction dimension Wg of the inclined portion 21A is too small than the above-described range, the snow column shear force based on the inclined portion 21A is insufficient, and conversely, when the dimension Wg is too large, a decrease in the rigidity of the center land portion 20 tends to become apparent. Note that the tire width direction dimension Wg of the inclined portion 21A and the tire width direction dimension Wr of the center land portion 20 are projected dimensions in the tire circumferential direction.

The center line of the parallel portion 21B of each of the plurality of subsidiary grooves 21 has an angle θB with respect to the tire width direction preferably in a range of not less than 0° and not greater than 5°. By disposing the parallel portion 21B in parallel with the tire width direction in the range of the above-described angle θB, a drainage effect and an edge effect on icy road surfaces can be obtained, and braking performance on icy road surfaces (performance on ice) can be effectively improved. When the angle θB of the parallel portion 21B is greater than 5°, the edge effect tends to decrease. Note that the parallel portion 21B has a groove depth d (in a range of not less than 7 mm and not greater than 14 mm) that is equal to the groove depth of the end portion (bent portion connected to the parallel portion 21B) on the center land portion 20 side in the extension direction of the inclined portion 21A and is set to be a groove width w that is narrower than the groove width W of the inclined portion 21A. The parallel portion 21B has a ratio of the groove width w to the groove depth d preferably in a range 0.05 ≤ w/d ≤ 0.30. As a result, the edge effect on the icy road surfaces can be obtained, and the rigidity of the center land portion 20 can be ensured. **In** the parallel portion 21B, when the ratio of the groove width w to the groove depth d is greater than 0.05, the drainage effect decreases, and when the ratio is greater than 0.15, a decrease in the rigidity of the center land portion 20 tends to become apparent.

The intermediate land portion 30 is formed with, in the tread surface 1A, a plurality of subsidiary grooves 31 disposed side by side in the tire circumferential direction, each of the plurality of subsidiary grooves 31 including an end opened to either of the pair of main grooves 11 and an end opened to either of the pair of auxiliary grooves 13. As a result, the intermediate land portion 30 is divided into a plurality of portions in the tire circumferential direction by the plurality of subsidiary grooves 31, and a plurality of intermediate blocks 30A disposed side by side in the tire circumferential direction are defined. Each of the plurality of subsidiary grooves 31 is formed to incline with respect to the tire width direction. Each of the plurality of subsidiary grooves 31 is formed to extend in a linear shape and to incline from the outer side in the tire width direction toward the outer side in the tire width direction (tire equatorial plane CL) to the side in the rotation direction when the tire is mounted on a vehicle. Each of the plurality of subsidiary grooves 31 is provided to face the opening side of the inclined portion 21A of each of the plurality of subsidiary grooves 21 at the adjacent center land portion 20 on the inner side in the tire width direction and to include a center line inclined at an angle equal to that of the inclined portion 21A (not less than 25° and not greater than 65°). As a result, the snow is easily introduced into each of the plurality of subsidiary grooves 31 when slipping relative to the road surfaces is generated when braking on the snow-covered road surfaces, and the performance on snow can be effectively improved. When the angle of each of the plurality of subsidiary grooves 31 is less than 25°, the effect of introducing snow into the plurality of subsidiary grooves 31 decreases, and conversely, when the angle is greater than 65°, a decrease in the rigidity of the intermediate land portion 30 tends to become apparent. Furthermore, each of the plurality of subsidiary grooves 31 continues to drain the drainage from the inclined portion 21A to the outer side in the tire width direction by facing the opening side of the inclined portion 21A of each of the plurality of subsidiary grooves 21 at the adjacent center land portion 20 on the inner side in the tire width direction, and the drainage effect can be improved.

Each of the plurality of intermediate blocks 30A is formed with, in the tread surface 1A, a plurality of sipes 32 extending in the tire width direction and disposed side by side in the tire circumferential direction. Most of the plurality of sipes 32 disposed side by side in the tire circumferential direction are formed such that an end is opened to either of the pair of main grooves 11 and an end is opened to either of the pair of auxiliary grooves 13. Furthermore, in each of the plurality of sipes 32 disposed side by side in the tire circumferential direction, both ends are closed in the intermediate block 30A on the leading side of the intermediate block 30A (the side in the rotation direction when the tire is mounted on a vehicle). Each of the plurality of sipes 32 has a sipe width in a range of not less than 0.3 mm and not greater than 1.2 mm and a groove depth of not greater than those of each of the pair of main grooves 11 and each of the pair of auxiliary grooves 13. Each of the plurality of sipes 32 is formed such that an opening portion to the tread surface 1A is in a zigzag shape continuously bent a plurally of times. In this case, each of the plurality of sipes 32 is a two-dimensional sipe, in which a shape in the tread portion 1 from the tread surface 1A to the inner side in the tire radial direction is a zigzag shape along a zigzag shape of the tread surface 1A, or a three-dimensional sipe, which is further bent in the tire circumferential direction in addition to the zigzag shape. Furthermore, the opening portion of each of the plurality of sipes 32 to the tread surface 1A may be continuously formed in a linear shape. In this case, each of the plurality of sipes 32 may be a one-dimensional sipe, in which the shape in the tread portion 1 from the tread surface 1A to the inner side in the tire radial direction is the linear shape along the linear shape of the tread surface 1A, or may be a two-dimensional sipe, which is bent.

The intermediate land portion 40 is formed with, in the tread surface 1A, a plurality of subsidiary grooves 41 disposed side by side in the tire circumferential direction, each of the plurality of subsidiary grooves 41 including an end opened to either of the pair of auxiliary grooves 13 and an end opened to either of the pair of main grooves 12. As a result, the intermediate land portion 40 is divided into a plurality of portions in the tire circumferential direction by the plurality of subsidiary grooves 41, and a plurality of intermediate blocks 40A disposed side by side in the tire circumferential direction are defined. Each of the plurality of subsidiary grooves 41 is formed to incline with respect to the tire width direction. Each of the plurality of subsidiary grooves 41 is formed to extend in a linear shape and to incline from the outer side in the tire width direction toward the outer side in the tire width direction (tire equatorial plane CL) to the side in the rotation direction when the tire is mounted on a vehicle.

Each of the plurality of intermediate blocks 40A is formed with, in the tread surface 1A, a plurality of sipes 42 extending in the tire width direction and disposed side by side in the tire circumferential direction. Most of the plurality of sipes 42 disposed side by side in the tire circumferential direction are formed such that an end is opened to either of the pair of auxiliary grooves 13 and an end is opened to either of the pair of main grooves 12. Furthermore, each of the plurality of sipes 42 disposed side by side in the tire circumferential direction is formed such that in the central portion in the tire circumferential direction of each of the plurality of intermediate blocks 40A, one end is closed in each of the plurality of intermediate blocks 40A and the other end is opened to either of the pair of main grooves 12. Furthermore, in each of the plurality of sipes 42 disposed side by side in the tire circumferential direction, both ends are closed in each of the plurality of intermediate blocks 40A, at both end portions of each of the plurality of intermediate blocks 40A in the tire circumferential direction. Each of the plurality of sipes 42 has a sipe width in a range of not less than 0.3 mm and not greater than 1.2 mm and a groove depth of not greater than those of each of the pair of auxiliary grooves 13 and each of the pair of main grooves 12. Each of the plurality of sipes 42 is formed such that an opening portion to the tread surface 1A is in a zigzag shape continuously bent a plurally of times. In this case, each of the plurality of sipes 42 is a two-dimensional sipe, in which a shape in the tread portion 1 from the tread surface 1A to the inner side in the tire radial direction is a zigzag shape along a zigzag shape of the tread surface 1A, or a three-dimensional sipe, which is further bent in the tire circumferential direction in addition to the zigzag shape. Furthermore, the opening portion of each of the plurality of sipes 42 to the tread surface 1A may be continuously formed in a linear shape. In this case, each of the plurality of sipes 42 may be a one-dimensional sipe, in which the shape in the tread portion 1 from the tread surface 1A to the inner side in the tire radial direction is the linear shape along the linear shape of the tread surface 1A, or may be a two-dimensional sipe, which is bent.

The shoulder land portion 50 is formed with, in the tread surface 1A, a plurality of subsidiary grooves 51 disposed side by side in the tire circumferential direction, each of the plurality of subsidiary grooves 51 including an end opened to either of the pair of main grooves 12 and an end opened to a ground contact edge T. As a result, the shoulder land portion 50 is divided into a plurality of portions in the tire circumferential direction by the plurality of subsidiary grooves 51, and a plurality of shoulder blocks 50A disposed side by side in the tire circumferential direction are defined. Each of the plurality of subsidiary grooves 51 is formed to extend in a linear shape.

Here, the ground contact edge T is the edge end of the outer side edge in the tire width direction of each of the plurality of shoulder blocks 50A. The ground contact edge T is each one of both outermost edges of the ground contact region in the tire width direction. The ground contact region is the region where the tread surface 1A of the tread portion 1 of the pneumatic tire is in contact with a dry, flat road surface, when the pneumatic tire is mounted on a specified rim, inflated to a specified internal pressure, and loaded with 70% of a specified load. Here, "specified rim" refers to a "standard rim" defined by the Japan Automobile Tyre Manufacturers Association Inc. (JATMA), a "Design Rim" defined by the Tire and Rim Association, Inc. (TRA), or a "Measuring Rim" defined by the European Tyre and Rim Technical Organisation (ETRTO). Moreover, a specified internal pressure refers to a "maximum air pressure" defined by JATMA, the maximum value in "TIRE LOAD LIMITS AT VARIOUS COLD INFLATION PRESSURES" defined by TRA, or "INFLATION PRESSURES" defined by ETRTO. "Specified load" refers to a "maximum load capacity" defined by JATMA, the maximum value in "TIRE LOAD LIMITS AT VARIOUS COLD INFLATION PRESSURES" defined by TRA, or "LOAD CAPACITY" defined by ETRTO.

Each of the plurality of shoulder blocks 50A is formed with, in the tread surface 1A, a plurality of sipes 52 extending in the tire width direction and disposed side by side in the tire circumferential direction. The plurality of sipes 52 disposed side by side in the tire circumferential direction are divided midway in the tire width direction. In all of the divided plurality of sipes 52 on the outer side in the tire width direction, both ends are closed within each of the plurality of shoulder blocks 50A. Furthermore, the divided plurality of sipes 52 on the inner side in the tire width direction are formed such that both ends are closed in each of the plurality of shoulder blocks 50A, at both end portions in the tire circumferential direction of each of the plurality of shoulder blocks 50A, and such that one end is closed in each of the plurality of shoulder blocks 50A and the other end is opened to either of the pair of main grooves 12, at the central portion in the tire circumferential direction of the other shoulder blocks 50A. Each of the plurality of sipes 52 has a sipe width in a range of not less than 0.3 mm and not greater than 1.2 mm and a groove depth of not greater than that of each of the pair of main grooves 12. Each of the plurality of sipes 52 is formed such that an opening portion to the tread surface 1A is in a zigzag shape continuously bent a plurally of times. **In** this case, each of the plurality of sipes 52 is a two-dimensional sipe, in which a shape in the tread portion 1 from the tread surface 1A to the inner side in the tire radial direction is a zigzag shape along a zigzag shape of the tread surface 1A, or a three-dimensional sipe, which is further bent in the tire circumferential direction in addition to the zigzag shape. Furthermore, the opening portion of each of the plurality of sipes 52 to the tread surface 1A may be continuously formed in a linear shape. **In** this case, each of the plurality of sipes 52 may be a one-dimensional sipe, in which the shape in the tread portion 1 from the tread surface 1A to the inner side in the tire radial direction is the linear shape along the linear shape of the tread surface 1A, or may be a two-dimensional sipe, which is bent.

Each of the plurality of shoulder blocks 50A is formed with one circumferential narrow groove 53 extending in the tire circumferential direction at the central portion in the tire width direction. The circumferential narrow groove 53 extends in linear shape in the tire circumferential direction, and one end is opened on the trailing side of each of the plurality of shoulder blocks 50A (the opposite side in the rotation direction when the tire is mounted on a vehicle), and the other end is closed in each of the plurality of shoulder blocks 50A. In other words, the circumferential narrow groove 53 is formed to be opened only on the outer side edge in the tire circumferential direction on the trailing side of each of the plurality of shoulder blocks 50A when the tire comes into contact with the ground. The circumferential narrow groove 53 is formed to have a groove depth in a range of not less than 0.2 mm and not greater than 3.0 mm and a groove width in a range of not less than 0.5 mm and not greater than 2.0 mm. The circumferential narrow groove 53 is provided preferably separated from, but may communicate with, the closed end of each of the plurality of sipes 52.

Moreover, although not illustrated in the drawings, in the tread surface 1A of each of plurality of blocks 20A, 30A, 40A, and 50A, a surface processing portion is provided. The surface processing portion includes a plurality of inclined narrow grooves extending at an inclination with respect to the tire circumferential direction. Each of the plurality of inclined narrow grooves has a depth from the tread surface 1A in a range of not less than 0.1 mm and not greater than 0.5 mm. Each of the plurality of inclined narrow grooves may or may not be opened from an end to an end in the tread surface 1A of each of the plurality of blocks 20A, 30A, 40A, and 50A. Furthermore, each of the plurality of inclined narrow grooves may be formed to be extending in linear shape, or may be formed to be curved midway or may be formed to be bent midway. The extension direction of each of the plurality of inclined narrow grooves is defined by a straight line connecting both end portions. Each of the plurality of sipes 22, 32, 42, 52 and the circumferential narrow groove 53 intersect with each of the plurality of inclined narrow grooves.

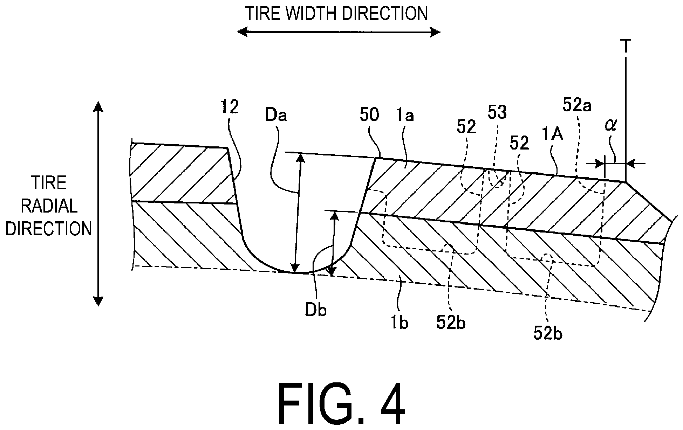

Furthermore, in the pneumatic tire according to the present embodiment, as illustrated in FIG. 4, the tread portion 1 is formed of a cap tread rubber 1a forming the tread surface 1A and an undertread rubber 1b layered on the inner side in the tire radial direction of the cap tread rubber 1a. The above-described each of the pair of main grooves 11, 12, auxiliary grooves 13, each of the plurality of subsidiary grooves 21, 31, 41, 51, and each of the plurality of sipes 22, 32, 42, 52 are provided from the cap tread rubber 1a to reach the undertread rubber 1b. Furthermore, the above-described circumferential narrow groove 53 and each of the plurality of surface processing portions are provided only in the cap tread rubber 1a. The cap tread rubber 1a has the JIS hardness Ha set in a range of not less than 45 and not greater than 55. The undertread rubber 1b has JIS hardness Hb greater and harder than the JIS hardness Ha of the cap tread rubber 1a. JIS hardness is the durometer hardness measured in accordance with JIS K-6253 using a type A durometer and under a temperature of 20°C.

The pneumatic tire according to the present embodiment has a snow traction index STI in the 0° direction set to 180 or greater. The pneumatic tire according to the present embodiment has the snow traction index STI in the 0° direction more preferably set in the range of from 180 to 240. The snow traction index STI in the 0° direction is an empirical formula by Uniroyal Inc. proposed by the Society of Automotive Engineers (SAE) and is defined by the following Mathematical Formula (1), when the pneumatic tire is mounted on a regular rim and inflated to a regular internal pressure in an unloaded state. **In** the Mathematical Formula (1), $\rho g$ is a groove density (mm/mm$^2$) and is calculated as a ratio between the total length (mm) of all of the plurality of grooves, except the plurality of sipes, projected in the tire width direction on the ground contact surface (here between the ground contact edges T) and the total area (mm$^2$) of the ground contact region (product of the tire ground contact width and tire circumferential length). $\rho s$ is a sipe density (mm/mm$^2$) and is calculated as a ratio between the total length (mm) of all of the plurality of sipes projected in the tire width direction and the total area (mm$^2$) of the ground contact region. Dg is an average groove depth (mm) of all of the plurality of grooves. The 0° direction means snow traction index with respect to the tire circumferential direction.

$$STI = -6.8 + 2202 \times \rho g + 672 \times \rho s + 7.6 \times Dg \cdots (1)$$

In this way, by defining the range of the JIS hardness Ha of the cap tread rubber 1a forming the tread surface 1A and the snow traction index in the 0° direction, the tread portion 1 flexibly conforms to the road surfaces, and a studless tire for use on icy and snowy roads functions effectively.

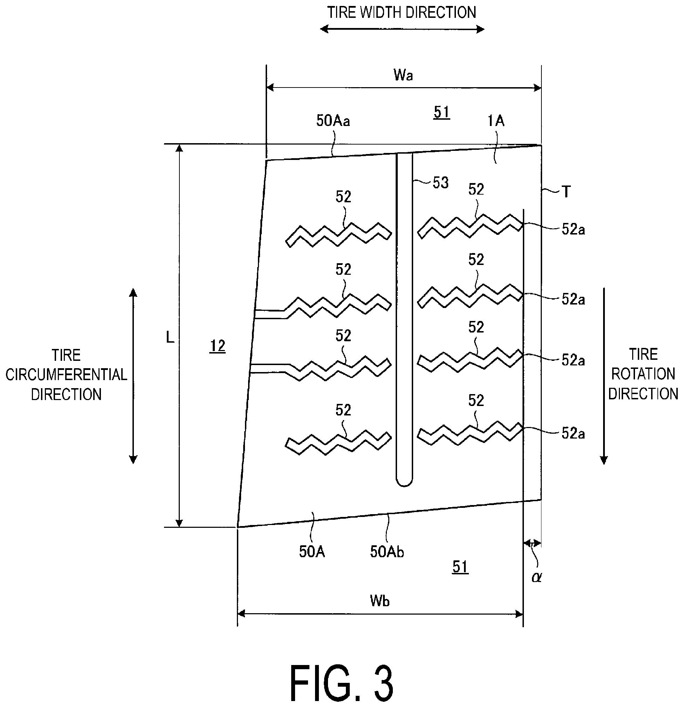

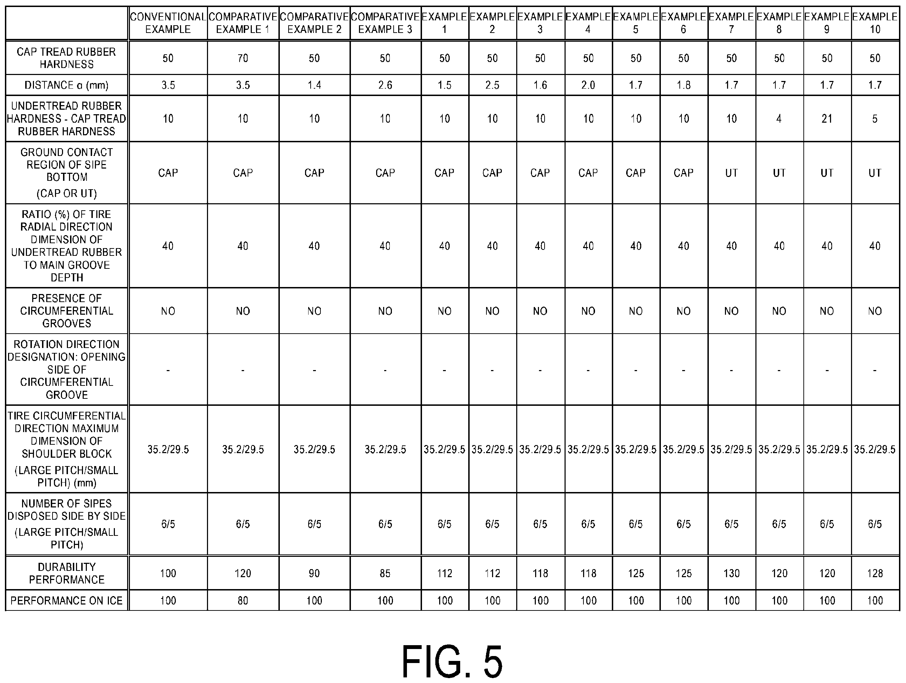

FIG. 3 is a partial enlarged plan view of a tread portion of a pneumatic tire according to the present embodiment. FIG. 4 is a partial enlarged meridian cross-sectional view of a pneumatic tire according to the present embodiment. FIG. 5 is a partial enlarged plan view of another example of a tread portion of a pneumatic tire according to the present embodiment.

According to the pneumatic tire of the present embodiment, as illustrated in FIG. 3, in each of the plurality of shoulder blocks 50A, a shortest distance $\alpha$ between the outer side edge in the tire width direction (ground contact edge T) and an end portion 52a on the outermost side in the tire width direction of one of the plurality of sipes 52 provided in each of the plurality of shoulder blocks 50A is formed in a range of not less than 1.5 mm or not greater than 2.5 mm. Note that in FIG. 3, the shortest distance $\alpha$ is illustrated as the distance between the end portion 52a on the outermost side in the tire width direction of all of the plurality of sipes 52 and the outer side edge in the tire width direction of each of the plurality of shoulder blocks 50A; however, the shortest distance $\alpha$ is taken from the sipe 52 in which the end portion 52a is closest to the outer side edge in the tire width direction of each of the plurality of shoulder blocks 50A, among the plurality of sipes 52.

Specifically, in the pneumatic tire according to the present embodiment, the JIS hardness Ha of the cap tread rubber 1a forming the tread surface 1A of each of the plurality of shoulder blocks 50A is in the range of not less than 45 and not greater than 55, the snow traction index STI in the 0° direction is not less than 180, and a studless tire for use on icy and snowy roads functions effectively. Furthermore, according to the above-described pneumatic tire, in each of the plurality of shoulder blocks 50A, the shortest distance $\alpha$ between the outer side edge in the tire width direction (ground contact edge T) and the end portion 52a on the outermost side in the tire width direction of one of the plurality of sipes 52 is formed in a range of not less than 1.5 mm and not greater than 2.5 mm.

When the shortest distance $\alpha$ exceeds 2.5 mm, the ground contact pressure of each of the plurality of shoulder blocks 50A becomes excessive, and the failure of tread chunk likely to be generated. Conversely, when the shortest distance $\alpha$ is less than 1.5 mm, the ground contact pressure is reduced, but the outer side edge in the tire width direction of each of the plurality of shoulder blocks 50A and the end portion 52a of each of the plurality of sipes 52 are too close, and cracks are likely to be generated. Thus, the shortest distance $\alpha$ is formed in the range of not less than 1.5 mm and not greater than 2.5 mm, and the generation of above-described problems can be suppressed. Furthermore, when the JIS hardness Ha of the cap tread rubber 1a forming the tread surface 1A of each of the plurality of shoulder blocks 50A is less than 45, the movement of each of the plurality of shoulder blocks 50A when being in contact with the road surface during the rotation of the pneumatic tire is increased, the amount of the deformation increases, and the rubber itself accumulates the heat likely to generate the above-described problems. Conversely, when the Ha exceeds 55, the adhesion friction force declines and the performance on ice tends to decline. Thus, the Ha is preferably in a range of not less than 45 and not greater than 55. As a result, the pneumatic tire according to the present embodiment can improve durability performance while ensuring the performance on ice.

In the pneumatic tire according to the present embodiment, the shortest distance $\alpha$ is preferably in a range of not less than 1.6 mm and not greater than 2.0 mm.

In other words, the generation of cracks is suppressed by setting the shortest distance $\alpha$ to not less than 1.6 mm, and the ground contact pressure is prevented from becoming excessive by setting the shortest distance $\alpha$ to not greater than 2.0 mm. As a result, the pneumatic tire according to the present embodiment can further improve the durability performance.

In the pneumatic tire according to the present embodiment, the shortest distance $\alpha$ is preferably in a range of not less than 1.7 mm and not greater than 1.8 mm.

In other words, the generation of cracks is further suppressed by setting the shortest distance $\alpha$ to not less than 1.7 mm, and the ground contact pressure is further prevented from becoming excessive by setting the shortest distance $\alpha$ to not greater than 1.8 mm. As a result, the pneumatic tire according to the present embodiment can even further improve the durability performance.

Furthermore, in the pneumatic tire according to the present embodiment, the JIS hardness Ha of the cap tread rubber 1a and the JIS hardness Hb of the undertread rubber 1b satisfy the relationship $5 \leq Hb - Ha \leq 20$ in each of the plurality of shoulder blocks 50A. Furthermore, in the pneumatic tire according to the present embodiment, as illustrated in FIG. 4, in all of the plurality of sipes 52 formed in one shoulder block 50A, a sipe bottom 52b equivalent to 80% of the sum of projected lengths is provided in the undertread rubber 1b.

Here, the sum of projected lengths of the plurality of sipes 52 is the total length obtained: by extending each of a plurality of zigzag shapes in the tire width direction in each of the plurality of sipes 52 formed in a zigzag shape in the tread surface 1A as illustrated in FIG. 3, by projecting each of the extended lengths in the tire circumferential direction, and by adding each of the projected lengths. In the pneumatic tire according to the present embodiment, the sipe bottom 52b equivalent to 80% of the sum of the projected lengths is provided to reach the undertread rubber 1b.

The failure mode of the tread chunk begins with cracks toward the sipe bottom 52b. Thus, by disposing the sipe bottom 52b in the undertread rubber 1b having higher JIS hardness than that of the cap tread rubber 1a, the amount of deformation of the sipe bottom 52b is suppressed to be small, and the generation of the cracks can be suppressed. In a case where the JIS hardness Ha of the cap tread rubber 1a is in a range of not less than 45 and not greater than 55, when Hb-Ha, which is the difference with respect to the JIS hardness Hb of the undertread rubber 1b, is less than 5, the ground contact pressure cannot be sufficiently reduced, and the effect of suppressing the failure of tread chunk declines. When the Hb-Ha exceeds 20, the effect of suppressing the failure of tread chunk is small, even when the sipe bottom 52b is disposed in the undertread rubber 1b. Thus, the pneumatic tire according to the present embodiment satisfies a relationship $5 \leq Hb - Ha \leq 20$, and by disposing the sipe bottom 52b in the undertread rubber 1b, durability performance can be further improved.

Furthermore, in the pneumatic tire according to the present embodiment, as illustrated in FIG. 4, each of the plurality of shoulder blocks 50A has, in a range of a groove depth Da of each of the pair of main grooves 12, a ratio ((Db/Da) $\times$ 100) of a tire radial direction dimension Db of the undertread rubber 1b to the groove depth Da of each of the pair of main grooves 12 in a range of not less than 50% and not greater than 60%.

The depth of each of the plurality of sipes 52 is commonly ensured to be not less than 50% from the tread surface 1A with respect to the groove depth Da of each of the pair of main grooves 12, and each of the plurality of sipes 52 does not immediately disappear by being worn out. When the ratio of the tire radial direction dimension Db of the undertread rubber 1b to the groove depth Da of each of the pair of main grooves 12 is less than 50%, the interface between the cap tread rubber 1a and the undertread rubber 1b is too close to the sipe bottom 52, and when the ratio exceeds 60%, the region occupied by the cap tread rubber 1a becomes too small, and performance on ice tends to decline. Accordingly, in the pneumatic tire according to the present embodiment, in a form where the sipe bottom 52b is disposed in the undertread rubber 1b, the ratio of the tire radial direction dimension Db of the undertread rubber 1b to the groove depth Da of each of the pair of main grooves 12 is in a range of not less than 50% and not greater than 60%, and performance on ice can be ensured.

Furthermore, in the pneumatic tire according to the present embodiment, as illustrated in FIG. 3, a rotation direction when the tire is mounted on a vehicle is designated, and the circumferential narrow groove 53 extending in the tire circumferential direction and having a depth of not less than 0.2 mm and not greater than 3.0 mm is provided at the central portion of the tire width direction of each of the plurality of shoulder blocks 50A. As illustrated in FIG. 3, the circumferential narrow groove 53 is formed to be opened only to an outer side edge in the tire circumferential direction 50Aa on the trailing side of each of the shoulder blocks 50A when the tire comes into contact with the ground and is formed to be not opened at an outer side edge in the tire circumferential direction 50Ab on the leading side and closed in each of the plurality of shoulder blocks 50A.

By providing the circumferential narrow groove 53 extending in the tire circumferential direction and being not less than 0.2 mm and not greater than 3.0 mm at the central portion in the tire width direction of each of the plurality of shoulder blocks 50A, the ground contact pressure of each of the plurality of shoulder blocks 50A is reduced, and the generation of the tread chunk can be suppressed. However, when the rotation direction when the tire is mounted on a vehicle is designated, a large amount of the tread chunk tends to be generated on the leading side of each of the plurality of shoulder blocks 50A. Thus, by being opened only to the outer side edge in the tire circumferential direction 50Aa on the trailing side of each of the plurality of shoulder blocks 50A when the tire contacts the ground, and by being closed in each of the plurality of shoulder blocks 50A without opened to the outer side edge in the tire circumferential direction 50Ab on the leading side, the movement on the leading side of each of the plurality of shoulder blocks 50A is suppressed when contacting the ground, and durability can be improved.

Note that in the pneumatic tire according to the present embodiment, as illustrated in FIG. 3, the rotation direction when mounted on a vehicle is designated, and a tire width direction dimension Wb of each of the plurality of shoulder blocks 50A on the leading side when the tire comes into contact with the ground is formed to be greater than a tire width direction dimension Wa on the trailing side when the tire comes into contact with the ground. Accordingly, the rigidity of each of the plurality of shoulder blocks 50A on the leading side when the tire comes into contact with the ground is increased, the movement on the leading side of each of the plurality of shoulder blocks 50A when contacting the ground is suppressed, and durability can be improved.

Furthermore, in the pneumatic tire according to the present embodiment, as illustrated in FIG. 3, when a maximum dimension L in the tire circumferential direction of each of the plurality of shoulder blocks 50A is not greater than 30 mm, the number of the plurality of sipes 52 disposed side by side in the tire circumferential direction is not greater than 4, and when the maximum dimension L in the tire circumferential direction of each of the plurality of shoulder blocks 50A is greater than 30 mm, the number of the plurality of sipes 52 disposed side by side in the tire circumferential direction is not less than 5.

When the number of the plurality of sipes 52 disposed side by side in the tire circumferential direction is not less than 5 in a case where the maximum dimension L in the tire circumferential direction of each of the plurality of shoulder blocks 50A is not greater than 30 mm, the plurality of sipes 52 that causes cracks is too dense, and durability performance declines. Conversely, when the number of the plurality of sipes 52 disposed side by side in the tire circumferential direction is not greater than 4 in a case where the maximum dimension L in the tire circumferential direction of each of the plurality of shoulder blocks 50A is greater than 30 mm, the ground contact pressure is too high, and durability performance declines. Thus, in the pneumatic tire according to the present embodiment, the plurality of sipes 52 disposed side by side is set to the above-described number with respect to the maximum dimension L in the tire circumferential direction of each of the plurality of shoulder blocks 50A, and durability performance can be improved.

Example

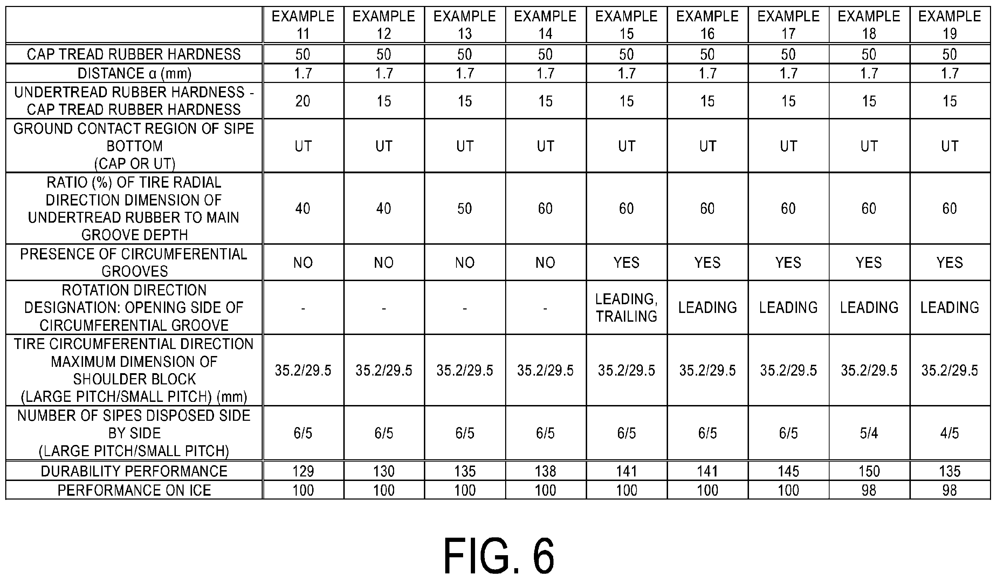

In the present Example, with respect to the pneumatic tire of above-described embodiment, performance tests for durability performance and performance on ice (braking performance on icy road surfaces) are performed on a plurality of types of test tires of different conditions (see FIGS. 5 and 6).

In the performance tests, pneumatic tires of tire size 205/55R15·91H are used as test tires, and the test tires are mounted on regular rims of 16 × 6.5 J.

In the evaluation method for durability performance, the test tires are inflated to an air pressure of 180 kPa, and while a circumferential temperature is controlled at 38 ± 3°C, the test tires are loaded with a load equivalent to 100% of the maximum load specified by JATMA and driven for 37 hours at a speed of 120 km/h, by using an indoor drum testing machine (drum diameter: 1707 mm). Thereafter, the test tires are inflated to an air pressure of 140 kPa and loaded with a load equivalent to 100% of the maximum load specified by JATMA. Driving is started at a speed of 120 km/h, and the running time when the tire breaks is measured. The measurement results are expressed as index values and evaluated with the Conventional Example being assigned as the reference (100). In the evaluation, larger index values indicate superior durability performance.

In the evaluation method for performance on ice, the test tires are inflated to an air pressure of 200 kPa, mounted on a test vehicle (Japan domestic Crossover Utility Vehicle (CUV)), and the braking distance from a driving speed of 40 km/h on a test course having icy road surfaces is measured. The measurement results are expressed as index values and evaluated with the Conventional Example being assigned as the reference (100). In the evaluation, larger index value indicates superior performance on ice. Note that in performance on ice, decline to an index of 98 indicates that performance is ensured, and decline to an index of 80 indicates that performance is decreased.

The pneumatic tires illustrated in FIGS. 5 and 6 have the tread pattern illustrated in FIG. 1, and in the pneumatic tires of the Conventional Example and the Comparative Example, the shortest distance between the outer side edge in the tire width direction of each of the plurality of shoulder blocks and the end portion on the outermost side in the tire width direction of one of the plurality of sipes deviates from the specified range. On the other hand, in the pneumatic tire of the Examples, the shortest distance between the outer side edge in the tire width direction of each of the plurality of shoulder blocks and the end portion on the outermost side in the tire width direction of one of the plurality of sipes is within the specified range.

As can be seen from the test results in FIGS. 5 and 6, in the pneumatic tires of Examples, durability performance is improved while maintaining performance on ice.

Reference Signs List

1 Tread portion
1 Tread surface
1a Cap tread rubber
1b Undertread rubber
11, 12 Main groove
13 Auxiliary groove
50 Shoulder land portion
50A Shoulder block
50Aa Outer side edge in the tire circumferential direction of trailing side of shoulder block
50Ab Outer side edge in the tire circumferential direction of leading side of shoulder block
51 Subsidiary groove
52 Sipe
52a End portion
52b Sipe bottom
53 Circumferential narrow groove
CL Tire equatorial plane
Da Groove depth of main groove
Db Tire radial direction dimension of undertread rubber

Ha JIS hardness of cap tread rubber
Hb JIS hardness of undertread rubber
L Tire circumferential direction maximum dimension of shoulder block
T Ground contact edge (outer side edge in the tire width direction of shoulder block)
Wa Tire width direction dimension of trailing side of shoulder block
Wb Tire width direction dimension of leading side of shoulder block
α shortest distance

**Claims**

1. A pneumatic tire, comprising:

    a plurality of shoulder blocks (50A) provided side by side in a tire circumferential direction on an outermost side in a tire width direction, defined by a main groove (12) extending in the tire circumferential direction in a tread surface (1) of a tread portion (1) and a plurality of subsidiary grooves (51) intersecting the main groove (12); and
    a plurality of sipes (52) extending along the tire width direction in the tread surface (1) of each of the plurality of shoulder blocks (50A) and provided side by side in the tire circumferential direction, each of the plurality of sipes (52) comprising at least an end portion (52a) terminated on an outer side in the tire width direction,
    a cap tread rubber (1a) forming the tread surface (1) having JIS hardness Ha in a range of not less than 45 and not greater than 55,
    a snow traction index in a 0°direction being not less than 180, and
    a shortest distance (α) between a ground contact edge (T) in the tire width direction of each of the plurality of shoulder blocks (50A) and an end portion (52a) on the outermost side in the tire width direction of one of the plurality of sipes (52) being formed in a range of not less than 1.5 mm and not greater than 2.5 mm;
    wherein the JIS hardness is the durometer hardness measured in accordance with JIS K-6253 using a type A durometer and under a temperature of 20°C,
    wherein the snow traction index in a 0°direction is defined by the following mathematical Formula

    $$STI = -6.8 + 2202 \times \rho g + 672 \times \rho s + 7.6 \times Dg,$$

    when the pneumatic tire is mounted on a regular rim and inflated to a regular internal pressure in an unloaded state,
    wherein $\rho g$ is a groove density (mm/mm2) and is calculated as a ratio between the total length (mm) of all of the plurality of grooves, except the plurality of sipes, projected in the tire width direction on the ground contact surface between the ground contact edges (T) and the total area (mm2) of the ground contact region defined as the product of the tire ground contact width and tire circumferential length,
    wherein $\rho s$ is a sipe density (mm/mm2) and is calculated as a ratio between the total length (mm) of all of the plurality of sipes projected in the tire width direction and the total area (mm2) of the ground contact region,
    wherein Dg is an average groove depth (mm) of all of the plurality of grooves and wherein the 0° direction means snow traction index with respect to the tire circumferential direction.

2. The pneumatic tire according to claim 1,
    wherein the shortest distance (α) between the ground contact edge (T) in the tire width direction of each of the plurality of shoulder blocks (50A) and the end portion (52a) on the outermost side in the tire width direction of one of the plurality of sipes (52) is formed in a range of not less than 1.6 mm and not greater than 2.0 mm.

3. The pneumatic tire according to claim 1,
    wherein the shortest distance (α) between the ground contact edge (T) in the tire width direction of each of the plurality of shoulder blocks (50A) and the end portion (52a) on the outermost side in the tire width direction of one of the plurality of sipes (52) is formed in a range of not less than 1.7 mm and not greater than 1.8 mm.

4. The pneumatic tire according to any one of claims 1 to 3, wherein,

    each of the plurality of shoulder blocks (50A) is provided with an undertread rubber (1b) layered on an inner side in a tire radial direction on the cap tread rubber (1a),
    JIS hardness Ha of the cap tread rubber (1a) and JIS hardness Hb of the undertread rubber (1b) satisfies a relationship of 5 ≤ Hb-Ha ≤ 20, and

in all of the plurality of sipes (52) formed in one shoulder block (50A), a sipe bottom (52b) equivalent to 80% of a sum of projected lengths is provided in the undertread rubber (1b);

wherein the sum of projected lengths is the total length obtained

(i) by extending each of a plurality of zigzag shapes in the tire width direction in each of the plurality of sipes (52) formed in a zigzag shape in the tread surface (1A),
(ii) by projecting each of the extended lengths in the tire circumferential direction, and
(iii) by adding each of the projected lengths.

5. The pneumatic tire according to claim 4,
wherein each of the plurality of shoulder blocks (50A) has a ratio of a tire radial direction dimension (Db) of the undertread rubber (1b) to a groove depth (Da) of the main groove (12) in a range of not less than 50% and not greater than 60%.

6. The pneumatic tire according to any one of claims 1 to 5,
wherein a rotation direction when mounted on a vehicle is designated, and a circumferential narrow groove (53) extending in the tire circumferential direction and having a depth of not less than 0.2 mm and not greater than 3.0 mm is provided at a central portion of the tire width direction of each of the plurality of shoulder blocks (50A), the circumferential narrow groove (53) being formed to be opened only on a ground contact edge (T) in the tire circumferential direction on a trailing side of each of the plurality of shoulder blocks (50A) when the pneumatic tire comes into contact with a ground.

7. The pneumatic tire according to any one of claims 1 to 6, wherein

when a maximum dimension (L) in the tire circumferential direction of each of the plurality of shoulder blocks (50A) is not greater than 30 mm, a number of the plurality of sipes (52) disposed side by side in the tire circumferential direction is not greater than 4, and
when the maximum dimension (L) in the tire circumferential direction of the plurality of shoulder blocks (50A) is greater than 30 mm, the number of each of the plurality of sipes (52) disposed side by side in the tire circumferential direction is not less than 5.

**Patentansprüche**

1. Luftreifen, umfassend:

eine Mehrzahl von Schulterblöcken (50A), die in Reifenumfangsrichtung auf einer äußersten Seite in Reifenbreitenrichtung nebeneinander bereitgestellt sind, die durch eine Hauptrille (12), die sich in Reifenumfangsrichtung in einer Laufflächenoberfläche (1) eines Laufflächenabschnitts (1) erstreckt, und eine Mehrzahl von Nebenrillen (51), die sich mit der Hauptrille (12) überschneiden, definiert sind; und
eine Mehrzahl von Lamellen (52), die sich entlang der Reifenbreitenrichtung in der Laufflächenoberfläche (1) jedes der Mehrzahl von Schulterblöcken (50A) erstrecken und in Reifenumfangsrichtung nebeneinander bereitgestellt sind, jede der Mehrzahl von Lamellen (52) umfassend mindestens einen Endabschnitt (52a), der auf einer Außenseite in Reifenbreitenrichtung endet,
einen Decklaufflächengummi (1a), der die Laufflächenoberfläche (1) ausbildet, der eine JIS-Härte Ha in einem Bereich von nicht weniger als 45 und nicht mehr als 55 aufweist,
einen Schneetraktionsindex in 0°-Richtung von nicht weniger als 180 und
ein kürzester Abstand (a) zwischen einem Bodenkontaktrand (T) in Reifenbreitenrichtung jedes der Mehrzahl von Schulterblöcken (50A) und einem Endabschnitt (52a) auf der äußersten Seite in Reifenbreitenrichtung einer der Mehrzahl von Lamellen (52), die in einem Bereich von nicht weniger als 1,5 mm und nicht mehr als 2,5 mm ausgebildet sind;
wobei die JIS-Härte die Durometerhärte ist, gemessen gemäß JIS K-6253 unter Verwendung eines Typ A Durometers und bei einer Temperatur von 20 °C,
wobei der Schneetraktionsindex in 0°-Richtung durch die folgende mathematische Formel definiert ist:

$$STI = -6{,}8 + 2202 \times \rho g + 672 \times \rho s + 7{,}6 \times Dg,$$

wobei der Luftreifen auf eine normale Felge aufgezogen ist, auf einen normalen Innendruck in einem unbeladenen Zustand aufgepumpt ist,

wobei $\rho g$ eine Rillendichte (mm/mm$^2$) ist und als Verhältnis zwischen der Gesamtlänge (mm) aller der Mehrzahl von Rillen, außer der Mehrzahl von Lamellen, projiziert in Reifenbreitenrichtung auf die Bodenkontaktoberfläche zwischen den Bodenkontakträndern (T), und der Gesamtfläche (mm$^2$) des Bodenkontaktbereichs, definiert als Produkt aus der Reifenbodenkontaktbreite und der Reifenumfangslänge, berechnet wird,

wobei $\rho s$ eine Lamellendichte (mm/mm$^2$) ist und als Verhältnis zwischen der Gesamtlänge (mm) aller der Mehrzahl von Lamellen, projiziert in Reifenbreitenrichtung, und der Gesamtfläche (mm$^2$) des Bodenkontaktbereichs berechnet wird,

wobei Dg eine durchschnittliche Rillentiefe (mm) aller der Mehrzahl von Rillen ist und wobei die 0°-Richtung den Schneetraktionsindex in Bezug auf die Reifenumfangsrichtung bedeutet.

2. Luftreifen gemäß Anspruch 1,
wobei der kürzeste Abstand ($\alpha$) zwischen dem Bodenkontaktrand (T) in Reifenbreitenrichtung jedes der Mehrzahl von Schulterblöcken (50A) und dem Endabschnitt (52a) auf der äußersten Seite in Reifenbreitenrichtung einer der Mehrzahl von Lamellen (52) in einem Bereich von nicht weniger als 1,6 mm und nicht mehr als 2,0 mm ausgebildet ist.

3. Luftreifen gemäß Anspruch 1,
wobei der kürzeste Abstand ($\alpha$) zwischen dem Bodenkontaktrand (T) in Reifenbreitenrichtung jedes der Mehrzahl von Schulterblöcken (50A) und dem Endabschnitt (52a) auf der äußersten Seite in Reifenbreitenrichtung einer der Mehrzahl von Lamellen (52) in einem Bereich von nicht weniger als 1,7 mm und nicht mehr als 1,8 mm ausgebildet ist.

4. Luftreifen gemäß einem der Ansprüche 1 bis 3, wobei

jeder der Mehrzahl von Schulterblöcken (50A) mit einem Unterlaufflächengummi (1b) bereitgestellt ist, der auf einer Innenseite in Reifenradialrichtung auf dem Decklaufflächengummi (1a) aufgeschichtet ist,
die JIS-Härte Ha des Decklaufflächengummis (1a) und die JIS-Härte Hb des Unterlaufflächengummis (1b) eine Beziehung von $5 \leq Hb-Ha \leq 20$ erfüllen, und
in allen der Mehrzahl von Lamellen (52), die in einem Schulterblock (50A) ausgebildet sind, ein Lamellenboden (52b), der 80 % einer Summe von projizierten Längen entspricht, in dem Unterlaufflächengummi (1b) bereitgestellt ist;
wobei die Summe von projizierten Längen die Gesamtlänge ist, erhalten

(i) durch Verlängern jeder einer Mehrzahl von Zickzackformen in Reifenbreitenrichtung in jeder der Mehrzahl von Lamellen (52), die in einer Zickzackform in der Laufflächenoberfläche (1A) ausgebildet sind,
(ii) durch Projizieren jeder der verlängerten Längen in Reifenumfangsrichtung und
(iii) durch Addieren jeder der projizierten Längen.

5. Luftreifen gemäß Anspruch 4,
wobei jeder der Mehrzahl von Schulterblöcken (50A) ein Verhältnis einer Radialrichtungsabmessung (Db) des Unterlaufflächengummis (1b) zu einer Rillentiefe (Da) der Hauptrille (12) in einem Bereich von nicht weniger als 50 % und nicht mehr als 60 % aufweist.

6. Luftreifen gemäß einem der Ansprüche 1 bis 5,
wobei eine Drehrichtung, wenn an einem Fahrzeug montiert, vorgesehen ist und eine schmale Umfangsrille (53), die sich in Reifenumfangsrichtung erstreckt, und die eine Tiefe von nicht weniger als 0,2 mm und nicht mehr als 3,0 mm aufweist, in einem Mittelabschnitt der Reifenbreitenrichtung jedes der Mehrzahl von Schulterblöcken (50A) bereitgestellt ist, wobei die schmale Umfangsrille (53) ausgebildet ist, um nur an einem Bodenkontaktrand (T) in Reifenumfangsrichtung auf einer Hinterseite jedes der Mehrzahl von Schulterblöcken (50A) geöffnet zu werden, wenn der Luftreifen mit dem Grund in Kontakt kommt.

7. Luftreifen gemäß einem der Ansprüche 1 bis 6,

wobei, wenn eine maximale Abmessung (L) in Reifenumfangsrichtung jedes der Mehrzahl von Schulterblöcken (50A) nicht größer als 30 mm ist, eine Anzahl der Mehrzahl von Lamellen (52), die in Reifenumfangsrichtung nebeneinander angeordnet sind, nicht größer als 4 ist, und

wenn die maximale Abmessung (L) in Reifenumfangsrichtung der Mehrzahl von Schulterblöcken (50A) größer als 30 mm ist, die Anzahl jeder der Mehrzahl von Lamellen (52), die in Reifenumfangsrichtung nebeneinander angeordnet sind, nicht weniger als 5 ist.

## Revendications

1. Pneumatique, comprenant :

   une pluralité de pavés d'épaulement (50A) prévus côte à côte dans une direction circonférentielle de pneu sur un côté le plus externe dans une direction de la largeur de pneu, définis par une rainure principale (12) s'étendant dans la direction circonférentielle de pneu dans une surface de bande de roulement (1) d'une partie de bande de roulement (1) et une pluralité de rainures auxiliaires (51) croisant la rainure principale (12) ; et

   une pluralité de lamelles (52) s'étendant le long de la direction de la largeur de pneu dans la surface de bande de roulement (1) de chacun de la pluralité de pavés d'épaulement (50A) et prévues côte à côte dans la direction circonférentielle de pneu, chacune de la pluralité de lamelles (52) comprenant au moins une partie d'extrémité (52a) terminée sur un côté externe dans la direction de la largeur de pneu,

   un caoutchouc de bande de roulement supérieure (1a) formant la surface de bande de roulement (1) ayant une dureté JIS Ha comprise dans une plage allant d'au moins 45 à au plus 55,

   un indice de traction sur neige dans une direction de 0 ° étant d'au moins 180, et

   une distance la plus courte ($\alpha$) entre un bord de contact au sol (T) dans la direction de la largeur de pneu de chacun de la pluralité de pavés d'épaulement (50A) et une partie d'extrémité (52a) sur le côté le plus externe dans la direction de la largeur de pneu de l'une de la pluralité de lamelles (52) étant formée dans une plage allant d'au moins 1,5 mm à au plus 2,5 mm ;

   dans lequel la dureté JIS est la dureté au duromètre mesurée conformément à JIS K-6253 à l'aide d'un duromètre de type A à une température de 20 °C,

   dans lequel l'indice de traction sur neige dans une direction de 0 ° est défini par la Formule mathématique suivante

   $$STI = -6,8 + 2202 \times \rho g + 672 \times \rho s + 7,6 \times Dg,$$

   lorsque le pneumatique est monté sur une jante normale et gonflé à une pression interne normale dans un état non chargé,

   dans lequel $\rho g$ est une densité de rainure (mm/mm2) et est calculé en tant que rapport entre la longueur totale (mm) de l'ensemble de la pluralité de rainures, à l'exception de la pluralité de lamelles, projetée dans la direction de la largeur de pneu sur la surface de contact au sol entre les bords de contact au sol (T) et la superficie totale (mm2) de la région de contact au sol définie en tant que produit de la largeur de contact au sol de pneu et de la longueur circonférentielle de pneu,

   dans lequel $\rho s$ est une densité de lamelle (mm/mm2) et est calculé en tant que rapport entre la longueur totale (mm) de l'ensemble de la pluralité de lamelles projetée dans la direction de la largeur de pneu et la superficie totale (mm2) de la région de contact au sol,

   dans lequel Dg est une profondeur moyenne de rainure (mm) de l'ensemble de la pluralité de rainures et dans lequel la direction de 0 ° signifie un indice de traction sur neige par rapport à la direction circonférentielle de pneu.

2. Pneumatique selon la revendication 1,
   dans lequel la distance la plus courte ($\alpha$) entre le bord de contact au sol (T) dans la direction de la largeur de pneu de chacun de la pluralité de pavés d'épaulement (50A) et la partie d'extrémité (52a) sur le côté le plus externe dans la direction de la largeur de pneu de l'une de la pluralité de lamelles (52) est formée dans une plage allant d'au moins 1,6 mm à au plus 2,0 mm.

3. Pneumatique selon la revendication 1,
   dans lequel la distance la plus courte ($\alpha$) entre le bord de contact au sol (T) dans la direction de la largeur de pneu de chacun de la pluralité de pavés d'épaulement (50A) et la partie d'extrémité (52a) sur le côté le plus externe dans la direction de la largeur de pneu de l'une de la pluralité de lamelles (52) est formée dans une plage allant d'au moins 1,7 mm à au plus 1,8 mm.

4. Pneumatique selon l'une quelconque des revendications 1 à 3, dans lequel,

chacun de la pluralité de pavés d'épaulement (50A) est pourvu d'un caoutchouc de bande de roulement inférieure (1b) superposé sur un côté interne dans une direction radiale de pneu sur le caoutchouc de bande de roulement supérieure (1a),

la dureté JIS Ha du caoutchouc de bande de roulement supérieure (1a) et la dureté JIS Hb du caoutchouc de bande de roulement inférieure (1b) satisfont à une relation de $5 \leq Hb\text{-}Ha \leq 20$, et

dans l'ensemble de la pluralité de lamelles (52) formées dans un pavé d'épaulement (50A), une partie inférieure de lamelle (52b) équivalente à 80 % d'une somme des longueurs projetées est prévue dans le caoutchouc de bande de roulement inférieure (1b) ;

dans lequel la somme des longueurs projetées est la longueur totale obtenue

(i) en étendant chacune d'une pluralité de formes en zigzag dans la direction de la largeur de pneu dans chacune de la pluralité de lamelles (52) formées en forme de zigzag dans la surface de bande de roulement (1A),

(ii) en projetant chacune des longueurs étendues dans la direction circonférentielle de pneu, et

(iii) en additionnant chacune des longueurs projetées.

5. Pneumatique selon la revendication 4,
dans lequel chacun de la pluralité de pavés d'épaulement (50A) a un rapport entre une dimension de direction radiale de pneu (Db) du caoutchouc de bande de roulement inférieure (1b) et une profondeur de rainure (Da) de la rainure principale (12) compris dans une plage allant d'au moins 50 % à au plus 60 %.

6. Pneumatique selon l'une quelconque des revendications 1 à 5,
dans lequel une direction de rotation lorsqu'il est sur un véhicule est désignée, et une rainure étroite circonférentielle (53) s'étendant dans la direction circonférentielle de pneu et ayant une profondeur d'au moins 0,2 mm et d'au plus 3,0 mm est prévue au niveau d'une partie centrale de la direction de la largeur de pneu de chacun de la pluralité de pavés d'épaulement (50A), la rainure étroite circonférentielle (53) étant formée pour être ouverte uniquement sur un bord de contact au sol (T) dans la direction circonférentielle de pneu sur un côté arrière de chacun de la pluralité de pavés d'épaulement (50A) lorsque le pneumatique entre en contact avec un sol.

7. Pneumatique selon l'une quelconque des revendications 1 à 6, dans lequel

lorsqu'une dimension maximale (L) dans la direction circonférentielle de pneu de chacun de la pluralité de pavés d'épaulement (50A) n'est pas supérieure à 30 mm, un nombre de la pluralité de lamelles (52) disposées côte à côte dans la direction circonférentielle de pneu n'est pas supérieur à 4, et

lorsque la dimension maximale (L) dans la direction circonférentielle de pneu de la pluralité de pavés d'épaulement (50A) est supérieure à 30 mm, le nombre de chacune de la pluralité de lamelles (52) disposées côte à côte dans la direction circonférentielle de pneu n'est pas inférieur à 5.

FIG. 1

TIRE WIDTH DIRECTION

TIRE RADIAL DIRECTION

EP 3 845 397 B1

FIG. 2

EP 3 845 397 B1

TIRE WIDTH DIRECTION

FIG. 3

FIG. 4

| | CONVENTIONAL EXAMPLE | COMPARATIVE EXAMPLE 1 | COMPARATIVE EXAMPLE 2 | COMPARATIVE EXAMPLE 3 | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 |
|---|---|---|---|---|---|---|---|---|---|---|---|---|---|---|
| CAP TREAD RUBBER HARDNESS | 50 | 70 | 50 | 50 | 50 | 50 | 50 | 50 | 50 | 50 | 50 | 50 | 50 | 50 |
| DISTANCE $\alpha$ (mm) | 3.5 | 3.5 | 1.4 | 2.6 | 1.5 | 2.5 | 1.6 | 2.0 | 1.7 | 1.8 | 1.7 | 1.7 | 1.7 | 1.7 |
| UNDERTREAD RUBBER HARDNESS - CAP TREAD RUBBER HARDNESS | 10 | 10 | 10 | 10 | 10 | 10 | 10 | 10 | 10 | 10 | 10 | 4 | 21 | 5 |
| GROUND CONTACT REGION OF SIPE BOTTOM (CAP OR UT) | CAP | CAP | CAP | CAP | CAP | CAP | CAP | CAP | CAP | CAP | UT | UT | UT | UT |
| RATIO (%) OF TIRE RADIAL DIRECTION DIMENSION OF UNDERTREAD RUBBER TO MAIN GROOVE DEPTH | 40 | 40 | 40 | 40 | 40 | 40 | 40 | 40 | 40 | 40 | 40 | 40 | 40 | 40 |
| PRESENCE OF CIRCUMFERENTIAL GROOVES | NO | NO | NO | NO | NO | NO | NO | NO | NO | NO | NO | NO | NO | NO |
| ROTATION DIRECTION DESIGNATION: OPENING SIDE OF CIRCUMFERENTIAL GROOVE | - | - | - | - | - | - | - | - | - | - | - | - | - | - |
| TIRE CIRCUMFERENTIAL DIRECTION MAXIMUM DIMENSION OF SHOULDER BLOCK (LARGE PITCH/SMALL PITCH) (mm) | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 |
| NUMBER OF SIPES DISPOSED SIDE BY SIDE (LARGE PITCH/SMALL PITCH) | 6/5 | 6/5 | 6/5 | 6/5 | 6/5 | 6/5 | 6/5 | 6/5 | 6/5 | 6/5 | 6/5 | 6/5 | 6/5 | 6/5 |
| DURABILITY PERFORMANCE | 100 | 120 | 90 | 85 | 112 | 112 | 118 | 118 | 125 | 125 | 130 | 120 | 120 | 128 |
| PERFORMANCE ON ICE | 100 | 80 | 100 | 100 | 100 | 100 | 100 | 100 | 100 | 100 | 100 | 100 | 100 | 100 |

FIG. 5

| | EXAMPLE 11 | EXAMPLE 12 | EXAMPLE 13 | EXAMPLE 14 | EXAMPLE 15 | EXAMPLE 16 | EXAMPLE 17 | EXAMPLE 18 | EXAMPLE 19 |
|---|---|---|---|---|---|---|---|---|---|
| CAP TREAD RUBBER HARDNESS | 50 | 50 | 50 | 50 | 50 | 50 | 50 | 50 | 50 |
| DISTANCE α (mm) | 1.7 | 1.7 | 1.7 | 1.7 | 1.7 | 1.7 | 1.7 | 1.7 | 1.7 |
| UNDERTREAD RUBBER HARDNESS - CAP TREAD RUBBER HARDNESS | 20 | 15 | 15 | 15 | 15 | 15 | 15 | 15 | 15 |
| GROUND CONTACT REGION OF SIPE BOTTOM (CAP OR UT) | UT | UT | UT | UT | UT | UT | UT | UT | UT |
| RATIO (%) OF TIRE RADIAL DIRECTION DIMENSION OF UNDERTREAD RUBBER TO MAIN GROOVE DEPTH | 40 | 40 | 50 | 60 | 60 | 60 | 60 | 60 | 60 |
| PRESENCE OF CIRCUMFERENTIAL GROOVES | NO | NO | NO | NO | YES | YES | YES | YES | YES |
| ROTATION DIRECTION DESIGNATION: OPENING SIDE OF CIRCUMFERENTIAL GROOVE | - | - | - | - | LEADING, TRAILING | LEADING | LEADING | LEADING | LEADING |
| TIRE CIRCUMFERENTIAL DIRECTION MAXIMUM DIMENSION OF SHOULDER BLOCK (LARGE PITCH/SMALL PITCH) (mm) | 35.2/29.5 | 35.2/29.5 | 35.2/29.5 | 35.2/29.5 | 35.2/29.5 | 35.2/29.5 | 35.2/29.5 | 35.2/29.5 | 35.2/29.5 |
| NUMBER OF SIPES DISPOSED SIDE BY SIDE (LARGE PITCH/SMALL PITCH) | 6/5 | 6/5 | 6/5 | 6/5 | 6/5 | 6/5 | 6/5 | 5/4 | 4/5 |
| DURABILITY PERFORMANCE | 129 | 130 | 135 | 138 | 141 | 141 | 145 | 150 | 135 |
| PERFORMANCE ON ICE | 100 | 100 | 100 | 100 | 100 | 100 | 100 | 98 | 98 |

FIG. 6

EP 3 845 397 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018039337 A
- JP 4299745 B
- JP 4386679 B
- WO 2018117024 A1
- JP 2014144777 A
- JP 2013018456 A
- JP 2005186827 A
- JP 2009262646 A
- JP H09142109 A